# EUROPEAN PATENT SPECIFICATION

(11) **EP 0 857 254 B1**
(45) Date of publication and mention of the grant of the patent: **18.09.2002**
(21) Application number: 96935741.7
(22) Date of filing: 22.10.1996
(51) Int. Cl.: F04C 29/00, F04C 18/16, F02B 39/12, F16D 25/12

(54) **TRANSMISSION INCLUDING A TWO-PART CLUTCH ARRANGEMENT**
ANTRIEBSSTRANG MIT ZWEITEILIGER KUPPLUNG
TRANSMISSION COMPORTANT UN DISPOSITIF D'EMBRAYAGE EN DEUX PARTIES

(30) Priority: 23.10.1995 SE 9503718
(43) Date of publication of application: 12.08.1998
(73) Proprietor: Lysholm Technologies AB, 104 65 Stockholm (SE)
(72) Inventor: ENGLUND, Arnold, S-163 57 Spaanga (SE)
(74) Representative: Wiedemann, Bernd
(86) International application number: SE9601347
(87) International publication number: WO97015759

(56) References cited:
- EP-A- 0 344 945
- EP-A- 0 412 369
- WO-A-95/11385
- DE-A- 2 331 315
- US-A- 3 038 575
- US-A- 3 335 836
- US-A- 4 226 319

## Description

### Field of the Invention

The present application relates to a transmission which includes a two part clutch arrangement of the kind set forth in the preamble of the attached patent claim 1.

### Background Information

A transmission having a two part clutch arrangement usually is very space consuming in relation to the size of the screw compressor with which the transmission is intended to cooperate. This is true especially in case where the transmission is intended for driving a supercharger of an internal combustion engine. In most cases an electromagnetic clutch device is used, which is easy to build-in in the transmission. Such a clutch device is not suitable, however, in the case of frequent engagements and disengagements of the clutch device. Therefore a mechanical clutch device is preferred. A drawback of the mechanical clutch device is that a comparatively high clutch pressure is required, which results in problems with the bearing devices.

A clutch device of this type is shown in US - A 4,226,319.

A disadvantage with the design shown in US - A 4,226,319 is, that the overall length of the clutch device becomes comparatively long depending among others on the fact that large axial pressure forces from the pressure plate of the clutch device have to be withstanded by a heavy thrust bearing requiring a large axial space. A long overall length makes the incorporation of the transmission in the screw compressor difficult, and involves increased mechanical stresses.

Another clutch device of this type is shown in WO95/11385. This reference discloses a device for connecting a screw rotor machine having with two rotors rotatably journalled in a housing to an exterior driving or driven pulley, wherein one end of each rotor comprises a shaft pivot protruding out of the housing. A pulley is attached to the shaft pivot for coupling the rotor by means of a belt to the exterior pulley. The pulley attached to the rotor running with the lower speed is connected to its shaft pivot via an engageable and disengageable clutch.

### Objects and Summary of the Invention

An object of the invention is to achieve a transmission, having a two-part clutch arrangement with which the above mentioned disadvantages are eliminated, and which, moreover, is specially uncomplicated to mount on the screw compressor.

This object is obtained, according to the invention, in that the transmission has the characteristics set forth in claim 1. The axial forces of the clutch device are arranged to be withstood in a practical way by a bearing for journalling of the driven input shaft of the screw compressor which is designed to withstand also the additional axial force of the clutch device. By that, a separate space consuming thrust bearing for the clutch device is eliminated.

A disc clutch of the design set forth in the characterizing part of the main claim is suitably used as the clutch device, which, if the driving device, for instance a belt pulley, with the attached clutch part are journalled in an end wall part of the screw compressor, permits withdrawal of these parts together with the end wall part from the screw compressor due to the fact that the two parts of the clutch device are dismountable.

Especially in a screw compressor which according to the invention is provided with synchronising wheels and possibly accompanying bearings the space for a clutch device will be very limited in the radial direction. It is therefore advantageous at an embodiment according to claim 1 to utilize the axial studs for placing return springs acting between the clutch parts as stated in claims 2 or 3.

For operating the pressure plate of the clutch device this is suitably moved by a hydraulically or pneumatically controlled annular piston, as stated in claims 4 or 5. The transmission is particularly suitable for driving a mechanical supercharger for an internal combustion engine, in which case the pressure fluid consists of oil, suitably from the pressure oil system of the engine.

### Brief Description of the Drawings

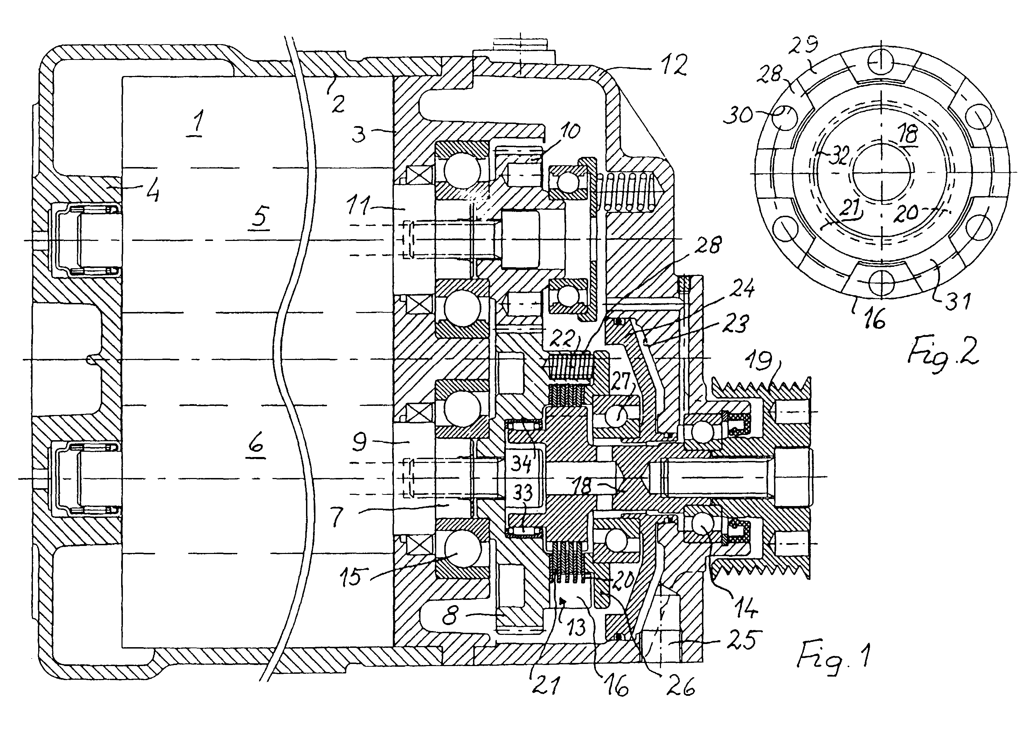

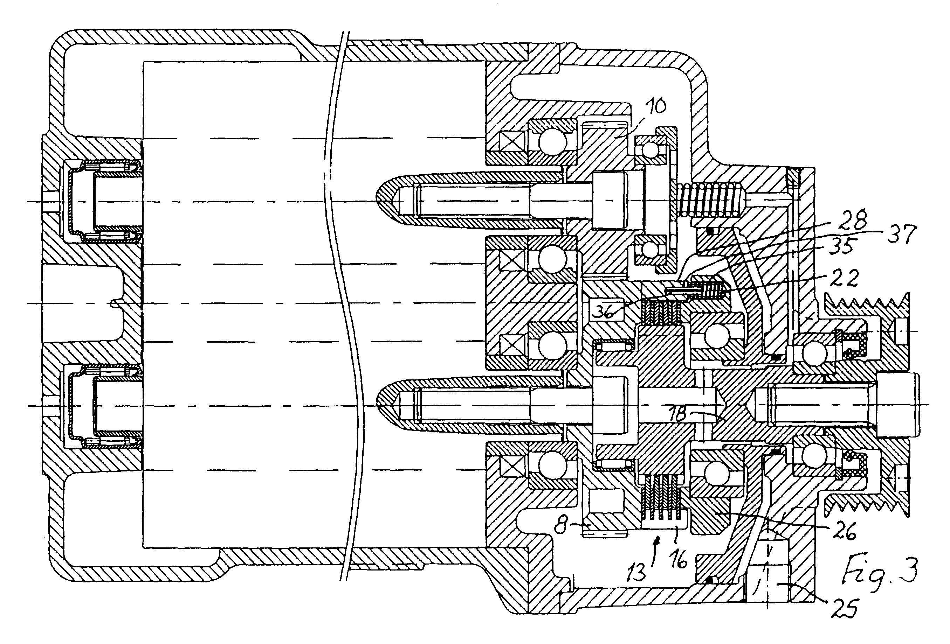

The invention is described in more detail in the following with reference to the attached drawings, which show two examples of embodiments of a transmission according to the invention applied to a small screw compressor to be used as a supercharger for internal combustion engines, and in which Figure 1 is a longitudinal sectional view of a part of the compressor with accompanying transmission, Figure 2 is a cross sectional view through the clutch device, and Figure 3 is a longitudinal view through a part of the compressor in Figure 1 but showing an alternative design of the transmission.

### Detailed Description of a Preferred Embodiment

The drawing shows a screw compressor 1 with a rotor housing 2 at one of which ends an end wall 3 is secured. In the end wall 3 and the opposite end wall 4 are a male rotor 5 and a female rotor 6 rotatably journalled.

The compressor is driven by an input shaft 7 which is secured to a synchronizing gear 8 and which forms a part of the shaft 9 of the female rotor 6. The synchronizing gear of the male rotor is designed 10 and is secured to the shaft 11 of the male rotor.

An end wall part 12 is secured to the end wall 3 forming a cap in which a clutch means 13 is journalled by two bearings 14 and 15. The clutch means 13 has two main parts: one part 16, which is integrated with the synchronizing gear 8, and one part 18, which extends out of the end wall part 12 and is secured to a belt pulley 19.

The clutch part 16 is as usual provided with annular discs 20 which are positioned between corresponding discs 21 of the clutch part 18. A number of pressure springs 22 strive to keep the clutch parts and accordingly the discs 20, 21 apart.

A cylinder chamber 23 is designed in the end wall part 12, in which chamber an annular piston 24 is journalled axially displaceable. A pressure fluid channel extends through the wall of the end wall part 12 to the cylinder chamber 23. A thrust bearing 27 is positioned between the annular piston 24 and a pressure plate 26 located at an outer disc 20.

At supply of pressure fluid having a requested pressure to the cylinder chamber 23 the annular piston 24 is displaced towards the thrust bearing 27, which in turn is displaced a short distance pushing the pressure plate 26 against the discs 20, 21, which in a manner known per se are pressed together forming a fixed connection between the clutch parts 18 and 16. As shown in Figure 2 the clutch part 16 comprises six studs 28 extending axially away from the gear 8 with intermediate spaces 29. Axial borings 30 are made in the studs 28, in which borings the pressure springs 22 are located pushing against the periphery of the pressure plate 26. Projections 31 of the discs 20 protrude into the interspaces 29 preventing the discs 20 from turning in relation to the clutch part 16 but axially movable in relation to said clutch part.

The discs 21 are by a splined coupling 32 prevented from turning in relation to the clutch part 18 which inner part, facing the gear 8, is journalled by a needle bearing 33 in a recess 34 in the centre of the gear 8.

At supply of pressure fluid to the cylinder chamber 23 via channel 25, which, if the compressor is a supercharger of an internal combustion engine, suitably is connected via a valve device, not shown, to the pressure oil system of the engine, the annular piston 24 is pushed against the thrust bearing 27, which is displaced a short distance and pushes the pressure plate 26 against the discs 20, 21. Thereby the gear 8 is pushed against the bearing 15 of the rotor 6, which bearing is dimensioned to withstand not only the radial forces from the rotor but also the axial forces from the clutch means 13. This arrangement together with the journalling of the inner end of the clutch part 18 in the recess 34 in the centre of the gear 8 reduces the overall length of the transmission considerably.

In compressors with small rotor and synchronizing gear diameters there are problems with the radial space for the clutch means 13. In that case it is suitable to modify the studs 28 and springs 22 as shown in Figure 3. The studs 28 are designed essentially thinner, and the borings 35 for the springs 22 are made in the pressure plate 26. The protruding ends of the springs 22 are fixed by pins 36 inserted in fine borings 37 in the studs 28.

## Claims

1. A transmission comprising a two part clutch arrangement (13) coupling a screw compressor (1, 2, 3) having two synchronizing gears (8, 10) journalled in an end wall (3) of the compressor housing (2) with a driving means, wherein an end surface facing away from the compressor housing (2) of one of the two synchronizing gears (8) includes a part (16) integrally formed with the synchronizing gear (8), said part (16) forming one part of the two part clutch arrangement (13), **characterized in that** said two part clutch arrangement (13) comprises a disc clutch provided with a plurality of discs (20) having radial projections (31) about their periphery protruding between axial studs (28) located at the periphery of one of said two synchronizing gears (8), and **in that** said axial studs (28) are comprised by said one part (16) of the two part clutch arrangement (13).

2. The transmission according to claim 1, further comprising axially positioned return springs (22) positioned in recesses (30) in at least some of the axial studs (28) acting against opposite parts of the periphery of a pressure plate (26).

3. The transmission according to claim 1, further comprising axially positioned return springs (22) positioned in borings (35) in the periphery of a recess plate (26) acting against at least some of the axial studs (28), an end of each return springs being applied against a stud and being guided by an axial pin (36) having one end inserted into an axial boring (37) in the stud and the other end being inserted into the center of the return spring (22).

4. The transmission according to claim 2, wherein the pressure plate (26) via a thrust bearing (27) is actuated by an annular piston (24), which is axially movable under the influence of a pressure fluid in a cylinder chamber (23) located in an end wall part (12) positioned on the screw compressor housing (2).

5. The transmission according to claim 3, wherein the pressure plate (26) via a thrust bearing (27) is actuated by an annular piston (24), which is axially movable under the influence of a pressure fluid in a cylinder chamber (23) located in an end wall part (12) positioned on the screw compressor housing (2).

6. The transmission according to claim 4 or 5, wherein the pressure fluid comprises oil.

## Patentansprüche

1. Kraftübertragung mit einer zweiteiligen Kupplungsanordnung (13), die einen Schraubenverdichter (1, 2, 3) mit zwei synchronisierenden Zahnrädern (8, 10), die an einer Stirnwand (3) des Verdichtergehäuses (2) gelagert sind, mit Antriebsmitteln verbindet, wobei eine von dem Verdichtergehäuse (2) weg weisende Stirnfläche eines der beiden synchronisierenden Zahnräder (8) ein einstückig mit diesem ausgebildetes Teil (16) umfaßt, das einen ersten Teil der zweiteiligen Kupplungsanordnung (13) bildet, **dadurch gekennzeichnet, daß** die zweiteilige Kupplungsanordnung (13) eine Scheibenkupplung aufweist, die mit einer Mehrzahl Scheiben (20) versehen ist, die radiale Vorsprünge (31) über ihren Umfang aufweisen, die zwischen Axialfortsätze (28) vorstehen, die am Umfang eines der beiden synchronisierenden Zahnräder (8) angeordnet sind, und die Axialfortsätze (28) von dem ersten Teil (16) der zweiteiligen Kupplungsanordnung (13) umfaßt sind.

2. Kraftübertragung nach Anspruch 1, **dadurch gekennzeichnet, daß** sie weiterhin axial ausgerichtete Rückstellfedern (22) aufweist, die in Vertiefungen (30) in wenigstens einigen der Axialfortsätze (28) angeordnet sind und gegen entgegengesetzte Teile des Umfangs einer Druckplatte (26) wirken.

3. Kraftübertragung nach Anspruch 1, **dadurch gekennzeichnet, daß** sie weiterhin axial ausgerichtete Rückstellfedern (22) aufweist, die in Bohrungen (35) im Umfang einer Druckplatte (26) angeordnet sind und gegen wenigstens einige der Axialfortsätze (28) wirken, wobei ein Ende jeder Rückstellfeder an einem Fortsatz angebracht und durch einen Axialstift (36) geführt ist, dessen eines Ende in eine Axialbohrung (37) in dem Fortsatz und dessen anderes Ende in die Mitte der Rückstellfeder (22) eingefügt ist.

4. Kraftübertragung nach Anspruch 2, **dadurch gekennzeichnet, daß** die Druckplatte (26) über ein Axiallager durch einen Ringkolben (24) betätigbar ist, der unter dem Einfluß eines Druckfluids in einer Zylinderkammer (23) axial beweglich ist, die in einem Stirnwandbereich (12) angeordnet ist, der sich an dem Schraubenverdichtergehäuse (2) befindet.

5. Kraftübertragung nach Anspruch 3, **dadurch gekennzeichnet, daß** die Druckplatte (26) über ein Axiallager durch einen Ringkolben (24) betätigbar ist, der unter dem Einfluß eines Druckfluids in einer Zylinderkammer (23) axial beweglich ist, die in einem Stirnwandbereich (12) angeordnet ist, der sich an dem Schraubenverdichtergehäuse (2) befindet.

6. Kraftübertragung nach Anspruch 4 oder 5, **dadurch gekennzeichnet, daß** das Druckfluid aus Öl besteht.

## Revendications

1. Transmission comprenant une configuration d'embrayage (13) en deux parties accouplant un compresseur à vis (1, 2, 3), ayant deux engrenages de synchronisation (8, 10) portés par une paroi d'extrémité (3) du logement (2) du compresseur, avec des moyens d'entraînement, dans laquelle une surface d'extrémité, dirigée à l'opposé du logement du compresseur (2) d'un des deux engrenages de synchronisation (8), inclut une partie (16) formée de façon intégrante avec l'engrenage de synchronisation (8), ladite partie (16) formant une première partie de la configuration d'embrayage (13) en deux parties, **caractérisée en ce que** ladite configuration d'embrayage (13) en deux parties comprend un embrayage à disques muni d'une pluralité de disques (20) ayant des projections radiales (31), autour de leur périphérie, dépassant entre des goujons axiaux (28) disposés à la périphérie d'un desdits deux engrenages de synchronisation (8) et **en ce que** lesdits goujons axiaux sont inclus dans ladite première partie (16) de la configuration d'embrayage (13) en deux parties.

2. Transmission selon la revendication 1, comprenant, en outre, des ressorts de rappel (22) positionnés axialement, disposés dans des cavités (30) dans au moins certains des goujons axiaux (28), agissant contre des parties opposées de la périphérie d'une plaque de pression (26).

3. Transmission selon la revendication 1, comprenant, en outre, des ressorts de rappel (22) positionnés axialement, positionnés dans des alésages (35) dans la périphérie d'une plaque de pression (26), agissant contre au moins certains des goujons axiaux (28), une extrémité de chaque ressort de rappel étant appliquée contre un goujon et étant guidée par une broche axiale (36), dont une extrémité est insérée dans un alésage axial (37) dans le goujon et l'autre extrémité est insérée au centre du ressort de rappel (22).

4. Transmission selon la revendication 2, dans laquelle la plaque de pression (26), par l'intermédiaire d'un palier de poussée (27), est actionnée par un piston annulaire (24), qui est mobile axialement sous l'effet d'un fluide sous pression dans une chambre de vérin (23) disposée dans une partie de paroi d'extrémité (12) positionnée sur le logement (2) du compresseur à vis.

5. Transmission selon la revendication 3, dans laquelle la plaque de pression (26), par l'intermédiaire d'un palier de poussée (27), est actionnée par un piston annulaire (24), qui est mobile axialement sous l'effet d'un fluide sous pression dans une chambre de vérin (23) disposée dans une partie de paroi d'extrémité (12) positionnée sur le logement (2) du compresseur à vis.

6. Transmission selon la revendication 4 ou 5, dans laquelle le fluide sous pression comprend de l'huile.
